# EUROPÄISCHE PATENTSCHRIFT

(11) **EP 4 143 651 B1**
(45) Veröffentlichungstag und Bekanntmachung des Hinweises auf die Patenterteilung: **04.06.2025**
(21) Anmeldenummer: 21722197.7
(22) Anmeldetag: 28.04.2021
(51) Int. Cl.: G05D 1/00

(54) **VERFAHREN, SYSTEM UND COMPUTERPROGRAMMPRODUKT ZUR BESTIMMUNG DER POSE EINER MOBILEN EINHEIT**
METHOD, SYSTEM AND COMPUTER PROGRAM PRODUCT FOR DETERMINING THE POSITION OF A MOBILE UNIT
PROCEDE, SYSTEME ET PRODUIT-PROGRAMME D'ORDINATEUR POUR DETERMINER LA POSITION D'UNE UNITE MOBILE

(30) Priorität: 29.04.2020 DE 102020111659
(43) Veröffentlichungstag der Anmeldung: 08.03.2023
(73) Patentinhaber: CARIAD SE, 38440 Wolfsburg (DE)
(72) Erfinder: HOFFMANN, Jonas, 10439 Berlin (DE); HOLICKI, Michael, 13505 Berlin (DE)
(74) Vertreter: Hofstetter, Schurack & Partner
(86) Internationale Anmeldenummer: PCT/EP2021/061112
(87) Internationale Veröffentlichungsnummer: WO 2021/219706

(56) Entgegenhaltungen:
- EP-A1- 3 444 693
- WO-A1-2019/222358
- CN-A- 110 083 165
- DE-A1- 102009 022 278
- KR-A- 20120 054 879
- US-A1- 2018 131 924
- US-A1- 2019 080 463

## Beschreibung

Die Erfindung betrifft ein Verfahren, System und Computerprogrammprodukt zur Bestimmung der Pose einer mobilen Einheit.

Lokalisierungsverfahren, die beispielsweise in der Robotik oder im Bereich des autonomen Fahrens verwendet werden können, dienen einer präzisen Bestimmung einer Pose oder Position eines Fahrzeugs. Dabei werden Landmarken, wie beispielsweise Verkehrszeichen oder Ampeln, in einem von einer Kamera erfassten Bild detektiert, klassifiziert und anschließend einer bekannten Landmarke mit vorbestimmten Positionsangaben zugeordnet. Aus einer solchen Zuordnung kann dann beispielsweise die Pose oder Position des Fahrzeugs bestimmt werden.

Die Genauigkeit eines solchen Verfahrens hängt sensitiv von der Anzahl der detektierten Landmarken und der Eindeutigkeit der Zuordnung der detektierten Landmarken zu den bekannten Landmarken ab. Insbesondere in Gebieten, in denen nur wenige oder gar keine Landmarken detektiert werden können oder eine Zuordnung nicht eindeutig erfolgen kann, lässt sich ein solches Verfahren nicht durchführen oder die Genauigkeit des Verfahrens ist unzureichend.

Die EP 3 444 693 A1 zeigt ein Verfahren und ein System zur Führung eines autonomen Fahrzeugs zur Extraktion eines befahrbaren Straßenbereichs. Das Verfahren umfasst das Erfassen des Straßenbereichs vor dem autonomen Fahrzeug mit einer Vielzahl von Sensoren. Danach wird eine Vielzahl von Bildern der Straße vor dem autonomen Fahrzeug mit einer Kamera aufgenommen. Der erfasste Straßenbereich und die Vielzahl von Bildern werden kartiert und verglichen (siehe auch US2018/131924 A1).

Aufgabe der vorliegenden Erfindung ist es daher, die aufgezeigten Nachteile zu vermeiden und ein zuverlässiges und genaues Verfahren, System und Computerprogrammprodukt zur Bestimmung der Pose einer mobilen Einheit vorzuschlagen.

Erfindungsgemäß wird die Aufgabe mit den in den Ansprüchen 1, 13 und 15 genannten Merkmalen gelöst. Vorteilhafte Varianten ergeben sich aus den in den Unteransprüchen genannten Merkmalen.

Die Erfindung betrifft ein Verfahren zur Bestimmung der Pose einer mobilen Einheit mit mindestens einer Sensorvorrichtung, die zum Erfassen von Umgebungsbildern der mobilen Einheit eingerichtet ist, und einer Karte, in der mindestens ein befahrbarer Bereich markiert ist. Die Karte ist in einer elektronischen Speichereinheit gespeichert. Bei dem Verfahren wird mindestens ein Umgebungsbild mittels der mindestens einen Sensorvorrichtung erfasst und mindestens ein kollisionsfreier Bereich anhand des mindestens einen erfassten Umgebungsbildes mittels einer elektronischen Auswerte- und Steuereinheit berechnet. Die Pose der mobilen Einheit wird durch einen Vergleich des mindestens einen kollisions-freien Bereichs mit dem mindestens einen in der Karte markierten befahr-baren Bereich mittels der elektronischen Auswerte- und Steuereinheit bestimmt.

Mit dem vorgeschlagenen Verfahren kann die Pose einer mobilen Einheit besonders zuverlässig und flexibel bestimmt werden. Besonders vorteilhaft kann das Verfahren in Umgebungen der mobilen Einheit verwendet werden, in denen wenige oder keine Landmarken detektiert werden können oder für die wenige oder keine Landmarken bekannt oder in einer Karte markiert sind, beispielsweise in kleinen Seitenstraßen oder in abgelegenen und wenig befahrenen Gebieten. Insbesondere kann das Verfahren verwendet werden, wenn die Zuordnung von detektierten zu bekannten Landmarken in einem Landmarken-basierten Lokalisierungsverfahren nicht eindeutig oder zuverlässig bestimmt werden kann. In solchen herausfordernden Situationen, kann ein kollisionsfreier Bereich immer noch zuverlässig und robust anhand des mindestens einen erfassten Umgebungsbildes berechnet und der Vergleich mit dem mindestens einen in der Karte markierten befahrbaren Bereich durchgeführt werden.

Die mobile Einheit ist ein Landfahrzeug, z.B. ein Kraftfahrzeug oder ein Roboter, oder ein Wasserfahrzeug, z.B. ein Boot oder ein Schiff. Die Pose der mobilen Einheit kann zumindest Positionsangaben umfassen. Positionsangaben können beispielsweise mit Werten für zwei oder drei Koordinaten gebildet sein. Die Pose kann auch Orientierungswinkelangaben umfassen. Orientierungswinkelangaben können beispielsweise mit Werten für zwei oder drei Orientierungswinkel gebildet sein. Vorzugsweise umfasst die Pose der mobilen Einheit sowohl Positionsangaben als auch Orientierungswinkelangaben. Beispielsweise kann eine Pose durch einen Vektor mit sechs Komponenten dargestellt werden. Dabei können drei Komponenten Koordinaten entsprechen, z.B. geographischen Koordinaten oder GPS-Koordinaten (GPS= Global Positioning System). Drei weitere Komponenten können Orientierungswinkeln entsprechen.

Der mindestens eine markierte befahrbare Bereich kann zumindest teilweise einem Teilbereich einer Straßenoberfläche oder einer Wasseroberfläche entsprechen. Vorzugsweise weist die Karte Kartenpositionsangaben für den mindestens einen markierten befahrbaren Bereich auf. Eine Kartenpositionsangabe kann dabei mit Werten für zwei oder drei Koordinaten in einem Kartenkoordinatensystem gebildet sein. Beispielsweise kann der mindestens eine markierte befahrbare Bereich durch eine zweidimensionale oder dreidimensionale Punkt- oder Pixelmenge bestimmt sein. Vorzugsweise entspricht der mindestens eine markierte befahrbare Bereich einer zweidimensionalen Fläche bzw. Punktmenge in einem zweidimensionalen oder dreidimensionalen Kartenkoordinatensystem. Das Kartenkoordinatensystem kann ein globales Referenzsystem sein, das beispielsweise mit geographischen Koordinaten oder GPS-Koordinaten gebildet sein kann.

Die Karte ist eine semantische Karte. Alternativ oder zusätzlich umfasst die Karte mindestens eine bekannte Landmarke mit Kartenpositionsangaben. Die mindestens eine Landmarke kann beispielsweise ein Verkehrsschild, eine Ampel oder ein Hydrant sein. Die Kartenpositionsangabe einer Landmarke kann Werte für zwei oder drei Koordinaten der jeweiligen Landmarke in dem Kartenkoordinatensystem umfassen.

Die mindestens eine Sensorvorrichtung kann eine Kamera, vorzugsweise eine Monokamera, aufweisen. Besonders vorzugsweise wird mit der mindestens einen Sensorvorrichtung eine Kalibrierung durchgeführt. Mittels der Kalibrierung kann einem Punkt oder Pixel des mindestens einen Umgebungsbildes zumindest eine Koordinate, beispielsweise eine Höhe bezüglich der lokalen Grundebene der mobilen Einheit, zugeordnet werden.

Die lokale Grundebene der mobilen Einheit kann zumindest einem Teilbereich der befahrbaren Oberfläche der mobilen Einheit entsprechen. Beispielsweise kann die lokale Grundebene durch die Auflagepunkte der Räder der mobilen Einheit auf der befahrbaren Oberfläche der mobilen Einheit bestimmt sein.

Die Kalibrierung kann anhand eines Kamerakoordinatensystems durchgeführt werden, wobei die optische Achse der Kamera als mindestens eine Sensorvorrichtung einer Koordinatenachse des Kamerakoordinatensystems entsprechen kann. Zudem kann eine Höhe der mindestens einen Sensorvorrichtung, der mobilen Einheit oder der optischen Achse bezüglich der lokalen Grundebene der mobilen Einheit vorbestimmt und bzw. oder bei der Kalibrierung berücksichtigt werden.

Der mindestens eine kollisionsfreie Bereich kann eine zweidimensionale oder dreidimensionale Punkt- oder Pixelmenge sein. Beispielsweise kann der mindestens eine kollisionsfreie Bereich einer zweidimensionalen oder dreidimensionalen Punktmenge in dem Kamerakoordinatensystem entsprechen. Der mindestens eine kollisionsfreie Bereich kann als ein Teilbereich der mit dem mindestens einen Umgebungsbild erfassten und von der mobilen Einheit befahrbaren Oberfläche, beispielsweise der Straßenoberfläche oder der Wasseroberfläche, berechnet werden. Insbesondere kann der mindestens eine kollisionsfreie Bereich den von der mobilen Einheit ausgehend in Fahrtrichtung erreichbaren Bereich der befahrbaren Oberfläche der mobilen Einheit bilden. Der mindestens eine kollisionsfreie Bereich kann insbesondere frei von Hindernissen, wie z.B. anderen mobilen Einheiten, Gehwegen oder Hydranten sein.

Der mindestens eine kollisionsfreie Bereich kann aus dem mindestens einen Umgebungsbild als eine Maske extrahiert werden, wobei jedem Pixel des mindestens einen Umgebungsbildes ein Bitwert zugeordnet werden kann. Beispielsweise kann ein Pixel mit dem Bitwert 1 dem kollisionsfreien Bereich zugeordnet werden, während ein Pixel mit dem Bitwert 0 dem Komplement des kollisionsfreien Bereichs zugeordnet werden kann. Die so definierte Maske kann durch eine binäre Matrix dargestellt werden, wobei die Reihen und Spalten der binäre Matrix der Reihen- und Spaltenanordnung der Pixel des mindestens einen Umgebungsbildes entsprechen kann. Vorzugsweise wird der mindestens eine kollisionsfreie Bereich anhand des mindestens einen Umgebungsbildes mittels semantischer Segmentierung berechnet. Besonders vorzugsweise wird der mindestens eine kollisionsfreie Bereich mittels eines maschinellen Lernverfahrens, insbesondere mittels eines trainierten neuronalen Netzes, berechnet.

Das Verfahren kann einen Initialisierungsschritt umfassen. Beispielsweise kann eine Position oder Pose der mobilen Einheit mittels mindestens einer weiteren Sensorvorrichtung initial geschätzt werden. Die mindestens eine weitere Sensorvorrichtung kann beispielsweise ein Satellitenortungssystem zum Erfassen von GPS-Daten, mindestens einen Geschwindigkeitssensor zum Erfassen von Odometrie-Daten und bzw. oder ein LIDAR-System aufweisen (LIDAR = light detection and ranging). Beispielsweise kann die Karte anhand der initial geschätzten Pose oder Position der mobilen Einheit über ein mobiles Kommunikationsnetzwerk über einen externen Server und bzw. oder von einer elektronischen Speichereinheit der mobilen Einheit abgerufen bzw. erhalten werden.

Das Verfahren kann auch eine geometrische Projektion umfassen. Beispielsweise kann der berechnete mindestens eine kollisionsfreie Bereich, vorzugsweise anhand der Kalibrierung, auf die lokale Grundebene der mobilen Einheit projiziert werden. Vorzugsweise wird auch der in der Karte markierte mindestens eine befahrbare Bereich, beispielsweise anhand der initial geschätzten Pose oder Position der mobilen Einheit oder anhand einer Hypothese für die Pose der mobilen Einheit, auf die lokale Grundebene der mobilen Einheit projiziert. Durch eine solche geometrische Projektion kann der Vergleich des mindestens einen berechneten kollisionsfreien Bereichs mit dem in der Karte markierten mindestens einen befahrbaren Bereich besonders schnell und effizient durchgeführt werden.

Besonders vorteilhaft lässt sich das vorgeschlagene Verfahren auch mit einem an sich bekannten Lokalisierungsverfahren, insbesondere einem Landmarken-basierten Lokalisierungsverfahren, kombinieren. Beispielsweise kann zunächst mindestens eine Hypothese für die Pose der mobilen Einheit mittels eines an sich bekannten Lokalisierungsverfahrens, insbesondere mittels eines Landmarken-basierten Lokalisierungsverfahrens, bestimmt bzw. berechnet werden.

Bei dem Vergleich des mindestens einen berechneten kollisionsfreien Bereichs mit dem mindestens einen in der Karte markierten befahrbaren Bereich kann eine Plausibilitätsprüfung durchgeführt werden. Mittels der Plausibilitätsprüfung kann die Plausibilität der mindestens einen Hypothese überprüft bzw. bestimmt oder eine Hypothese, vorzugsweise eine plausible Hypothese, aus mehreren Hypothesen ausgewählt und bei der Bestimmung der Pose der mobilen Einheit berücksichtigt werden. Alternativ oder zusätzlich kann mittels der Plausibilitätsprüfung auch die Plausibilität der initial geschätzten Pose der mobilen Einheit bestimmt werden.

Vorzugsweise ist das Lokalisierungsverfahren ein Landmarken-basiertes Lokalisierungsverfahren. Das Landmarken-basierte Lokalisierungsverfahren kann eine Detektion und bzw. oder eine Klassifikation von mindestens einer Landmarke in dem mindestens einen Umgebungsbild umfassen. Beispielsweise kann eine Detektion anhand eines trainierten neuronalen Netzwerks erfolgen.

Alternativ oder zusätzlich kann eine Klassifikation anhand eines trainierten neuronalen Netzwerks durchgeführt werden.

Die mindestens eine Hypothese für die Pose der mobilen Einheit kann anhand der Zuordnung mindestens einer in dem mindestens einen erfassten Umgebungsbild detektierten Landmarke mit mindestens einer in der Karte markierten bekannten Landmarke bestimmt werden. Dazu kann das Lokalisierungsverfahren beispielsweise einen Partikelfilter oder ein Kalman-Filter, vorzugsweise einen Multi-Hypothesen Kalman-Filter, umfassen.

Es kann vorkommen, dass eine Zuordnung mehrerer detektierter Landmarken zu mehreren bekannten Landmarken mittels eines Landmarken-basierten Lokalisierungsverfahrens nicht eindeutig erfolgen kann. In diesem Fall können mehrere Hypothesen bestimmt werden. Jede Hypothese kann dabei einer spezifischen Zuordnung der mehreren detektierten Landmarken zu den mehreren bekannten Landmarken entsprechen. Für eine jeweilige Zuordnung bzw. Hypothese kann dann mittels des Landmarken-basierten Lokalisierungsverfahrens eine Hypothese für die Pose der mobilen Einheit bestimmt werden. Insbesondere können so mehrere Hypothesen für die Pose der mobilen Einheit bestimmt werden.

Falls mittels des Lokalisierungsverfahrens mehrere Hypothesen bestimmt werden, kann die Plausibilitätsprüfung vorteilhaft für alle diese Hypothesen durchgeführt werden. Falls dann mehrere plausible Hypothesen bestimmt werden, kann bei dem Vergleich oder bei der Plausibilitätsprüfung auch eine Gewichtung der mehreren plausiblen Hypothesen durchgeführt werden.

Die Plausibilitätsprüfung kann eine Bestimmung desjenigen Teilbereichs oder derjenigen Teilmenge des mindestens einen kollisionsfreien Bereichs umfassen, der dem in der Karte markierten mindestens einen befahrbaren Bereich anhand der mindestens einen Hypothese eindeutig zuordenbar ist. Für den Vergleich bzw. die Plausibilitätsprüfung kann der mindestens eine kollisionsfreie Bereich und der mindestens eine befahrbare Bereich anhand der mindestens einen Hypothese und einer entsprechenden Koordinatentransformation in ein gemeinsames Koordinatensystem transformiert werden.

Vorzugsweise werden der mindestens eine kollisionsfreie Bereich und der mindestens eine befahrbare Bereich anhand der mindestens einen Hypothese und bzw. oder anhand der Kalibrierung auf eine Flache in einem gemeinsamen Koordinatensystem projiziert. Die Fläche kann beispielsweise der lokalen Grundebene der mobilen Einheit entsprechen. Die Fläche kann auch der in der Karte durch den markierten befahrbaren Bereich definierten Fläche entsprechen. Die Fläche kann auch einer durch den mindestens einen markierten befahrbaren Bereich definierten Fläche oder Hyperfläche in dem Kartenkoordinatensystem oder in dem Kamerakoordinatensystem entsprechen.

Eine Hypothese kann plausibel sein, wenn das Verhältnis aus einer Größe eines dem markierten befahrbaren Bereichs anhand der mindestens einen Hypothese eindeutig zuordbaren Teilbereichs des kollisionsfreien Bereichs und dessen Komplement einen kritischen Wert überschreitet. Eine Gewichtung der plausiblen Hypothesen kann auch anhand des so bestimmten Verhältnisses aus der Größe des ermittelten Teilbereichs und dessen Komplement bestimmt werden.

Beispielsweise kann eine Schnittmenge des auf eine gemeinsame Fläche projizierten mindestens einen kollisionsfreien Bereichs und des mindestens einen markierten befahrbaren Bereichs bestimmt werden. Die Anzahl valider Pixel kann der Anzahl der in der Schnittmenge enthaltenen Pixel entsprechen (Pixel, die dem mindestens einen markierten befahrbaren Bereich eindeutig zuordenbar sind). Die Anzahl invalider Pixel kann der Anzahl der Pixel entsprechen, die in dem mindestens einen kollisionsfreien Bereich enthalten sind, aber nicht zur Schnittmenge gehören (Pixel, die dem mindestens einen markierten befahrbaren Bereich nicht eindeutig zuordenbar sind).

Bei der Plausibilitätsprüfung kann dann ein Vergleich des Verhältnisses aus der Anzahl valider Pixel zu der Anzahl invalider Pixel mit einem vorgegebenen kritischen Wert umfassen. Wird der vorgegebene kritische Wert überschritten, kann die mindestens eine Hypothese als plausibel klassifiziert werden. Eine Gewichtung mehrerer plausibler Hypothesen kann dann anhand des Verhältnisses aus der Anzahl valider Pixel zu der Anzahl invalider Pixel bestimmt werden, wobei das höchste Gewicht dem betragsmäßig größten Verhältnis aus der Anzahl valider Pixel zu der Anzahl invalider Pixel entspricht.

Bei dem Vergleich kann anhand der Plausibilitätsprüfung die Pose der mobilen Einheit bzw. eine neue Schätzung der Pose der mobilen Einheit bestimmt werden. Beispielsweise kann die mittels des Vergleichs bestimmte Pose der mobilen Einheit einer plausiblen Hypothese entsprechen. Die durch den Vergleich bestimmte Pose der mobilen Einheit kann auch der initial geschätzten Pose der mobilen Einheit entsprechen. Falls beispielsweise mittels der Plausibilitätsprüfung keine plausible Hypothese bestimmt werden kann, kann die mittels des Vergleichs bestimmte Pose der mobilen Einheit der initial geschätzten Pose der mobilen Einheit entsprechen. Falls mehrere plausible Hypothese mittels der Plausibilitätsprüfung bestimmt werden und der Vergleich eine Gewichtung der mehreren plausiblen Hypothesen umfasst, kann die durch den Vergleich bestimmte Pose der mobilen Einheit auch der plausiblen Hypothese mit dem größten Gewicht entsprechen.

Zusätzlich oder alternativ zu dem Lokalisierungsverfahren können auch mehrere Hypothesen für die Pose der mobilen Einheit als Initialwerte oder Initialvektoren in Form eines regulären oder zufälligen Rasters bestimmt werden. Das Raster kann beispielsweise anhand der initial geschätzten Position oder Pose der mobilen Einheit bestimmt werden bzw. diese als einen Initialwert oder als einen Initialvektor enthalten. Die Positionsangaben und bzw. oder die Orientierungswinkelangaben der so bestimmten Hypothesen können als Punktwolke in einem Koordinatensystem beispielsweise einem zweidimensionalen oder dreidimensionalen Bravais-Gitter, vorzugsweise einem quadratischen oder kubischen Gitter, entsprechen. Alternativ können die mehreren Hypothesen als Initialvektoren auch zufällig mittels eines Zufallsgenerators erzeugt werden.

Zusätzlich oder alternativ zu der Plausibilitätsprüfung kann eine Aktualisierung der Pose oder Position der mobilen Einheit stattfinden.

Für die Aktualisierung der Poser oder Position der mobilen Einheit kann bei dem Vergleich des mindestens einen berechneten kollisionsfreien Bereichs mit dem mindestens einen in der Karte markierten befahrbaren Bereich eine Minimierung einer Kostenfunktion durchgeführt werden. Die Kostenfunktion kann für zumindest eine Hypothese einen charakteristischen Abstand zwischen dem mindestens einen berechneten kollisionsfreien Bereich und den mindestens einen in der Karte markierten befahrbaren Bereich in einem gemeinsamen Koordinatensystem angeben. Das Minimum der Kostenfunktion kann dabei mittels eines Optimierungsverfahrens, beispielsweise mittels der Methode der kleinsten Quadrate, mittels Monte-Carlo-Simulation, mittels der Linearisierung im Korrektur-Schritt eines Kalman Filters oder mittels der Methode simulierter Abkühlung (im Englischen als simulated annealing bezeichnet), bestimmt werden. Die durch den Vergleich bestimmte Pose der mobilen Einheit kann dem Minimum der Kostenfunktion entsprechen. Der mindestens eine charakteristische Abstand kann anhand der kürzesten Distanz zwischen einem jeweiligen dem mindestens einen kollisionsfreien Bereich zuordbaren dreidimensionalen Punkt und der in der Karte durch den mindestens einen markierten befahrbaren Bereich definierten Fläche bestimmt werden. Beispielsweise kann der mindestens eine charakteristische Abstand einem gemittelten Wert oder der Summe aller so bestimmbaren kürzesten Distanzen entsprechen.

Vorzugweise wird die Minimierung der Kostenfunktion verwendet, um eine Aktualisierung einer Position oder Pose der mobilen Einheit zu bestimmen.

In einer bevorzugten Ausführungsform wird die Minimierung der Kostenfunktion für eine oder mehrere mittels eines Lokalisierungsverfahrens bestimmte Hypothesen durchgeführt. So kann die Minimierung der Kostenfunktion bzw. das Optimierungsverfahren auch mit einem Landmarkenbasierten Lokalisierungsverfahren kombiniert werden.

Es wäre auch möglich, die Minimierung der Kostenfunktion dabei für mehrere ad-hoc als Initialwerte oder Initialvektoren bestimmte Hypothesen durchzuführen. Eine Minimierung der Kostenfunktion bzw. das Optimierungsverfahren kann dann vorteilhaft insbesondere in Umgebungen der mobilen Einheit verwendet werden, in denen keine Landmarke detektiert werden kann oder für die in der Karte keine bekannten Landmarken markiert sind und deshalb ein Landmarken-basiertes Lokalisierungsverfahren nicht durchführbar ist. Es kann auch vorgesehen sein, dass eine initial geschätzte Pose der mobilen Einheit mittels der weiteren Sensorvorrichtung, mindestens eine Hypothese mittels eines Lokalisierungsverfahrens und bzw. oder mindestens eine weitere Hypothese mittels der Minimierung einer Kostenfunktion bestimmt werden/wird. Für die initial geschätzte Pose, die mindestens eine Hypothese und bzw. oder die mindestens eine weitere Hypothese kann auch eine Plausibilitätsprüfung durchgeführt werden. Anhand des Vergleichs des mindestens einen berechneten kollisionsfreien Bereichs mit dem mindestens einen in der Karte markierten befahrbaren Bereich kann die Pose der mobilen Einheit so bestimmt werden, dass sie der initial geschätzten Pose, der mindestens einen Hypothese, oder der mindestens einen weiteren Hypo-these entspricht.

Die Erfindung betrifft auch ein System, das eine mobile Einheit mit mindestens einer Sensorvorrichtung, eine elektronische Speichereinheit und eine elektronische Auswerte- und Steuereinheit umfasst. Die mindestens eine Sensorvorrichtung ist eingerichtet, mindestens ein Umgebungsbild der mobilen Einheit zu erfassen. Eine Karte, die mindestens einen in der Karte markierten befahrbaren Bereich aufweist, ist in der elektronischen Speichereinheit gespeichert. Die elektronische Auswerte- und Steuereinheit ist eingerichtet, mindestens einen kollisionsfreien Bereich anhand mindestens eines mittels der mindestens einen Sensorvorrichtung erfassten Umgebungsbildes zu berechnen. Die elektronische Auswerte- und Steuereinheit ist auch dazu eingerichtet, eine Pose der mobilen Einheit durch den Ver-gleich des mindestens einen kollisionsfreien Bereichs mit dem mindestens einen in der Karte markierten befahrbaren Bereich zu bestimmen. Die Karte ist eine semantische Karte und/oder umfasst mindestens eine bekannte Landmarke mit Kartenpositionsangaben. Vorzugsweise weist die mindestens eine Sensorvorrichtung eine kalibrierte Monokamera auf. Besonders vorzugsweise ist die elektronische Auswerte- und Steuereinheit dazu eingerichtet, den mindestens einen kollisionsfreien Bereich anhand einer mittels der kalibrierten Monokamera erfassten Umgebungsbildsequenz zu berechnen.

Es wäre auch möglich, dass die mindestens eine Sensorvorrichtung einen 3D Sensor, zum Beispiel einen LiDAR Sensor, aufweist.

Die mindestens eine Sensorvorrichtung kann auch eine Kombination von einem oder mehreren 3D Sensoren und/oder einem oder mehreren 2D Sensoren, wie zum Beispiel mehrere Kameras, aufweisen.

Die elektronische Speichereinheit kann Teil der elektronischen Auswerte- und Steuereinheit oder mit einem externen Server elektronisch verbunden sein. Die elektronische Speichereinheit kann ein Festspeicher oder ein Arbeitsspeicher sein.

Die elektronische Auswerte- und Steuereinheit kann eine CPU (central processing unit), eine GPU (graphical processing unit) und bzw. oder eine Recheneinheit aufweisen. Das System, die mobile Einheit und bzw. oder die elektronische Auswerte- und Steuereinheit kann bzw. können auch mindestens eine weitere Sensorvorrichtung und bzw. oder ein mobiles Kommunikationssystem aufweisen.

Die mindestens eine weitere Sensorvorrichtung kann eingerichtet sein, eine Pose oder Position der mobilen Einheit initial zu schätzen. Beispielsweise kann die mindestens eine weitere Sensorvorrichtung ein Satellitenortungs-system, vorzugsweise ein GPS (Global Positioning System), aufweisen bzw. als Teil eines Satellitenortungssystems ausgebildet sein. Die mindestens eine weitere Sensorvorrichtung kann auch mindestens einen Geschwindigkeitssensor zur Schätzung von Odometrie-Daten aufweisen.

Das mobile Kommunikationssystem kann ein WLAN-fähiges (WLAN = wireless local area network) und bzw. oder Mobilfunkfähiges Kommunikations-system sein. Beispielsweise kann das mobile Kommunikationssystem dazu eingerichtet sein, die Karte über einen externen Server von einer elektronische Speichereinheit abzufragen bzw. zu erfassen.

Die Erfindung stellt auch ein Computerprogrammprodukt bereit. Das Computerprogrammprodukt weist ein Computerprogramm (bzw. eine Befehls-folge) auf. Das Computerprogramm weist dabei Softwaremittel zum Durchfuhren eines wie weiter oben beschriebenen Verfahrens oder zum Ansteuern eines wie weiter oben beschriebenen Systems auf, wenn das Computerprogramm in einer Recheneinheit abläuft.

Vorzugsweise kann das Computerprogrammprodukt direkt in einen internen elektronischen Speicher bzw. eine Speichereinheit der Recheneinheit geladen werden oder ist in diesem bereits gespeichert und umfasst typischerweise Teile eines Programmcodes zum Durchführen des beschriebenen Verfahrens, wenn das Computerprogrammprodukt auf der Recheneinheit abläuft bzw. ausgeführt wird. Der Programmcode oder Teile des Programmcodes können in einer Skriptsprache oder einer Compilersprache, wie z.B. C, C++ oder Python formuliert sein. Das Computerprogrammprodukt kann auf einem maschinenlesbaren Träger, vorzugsweise einem digitalen Speichermedium gespeichert sein.

Ausführungsbeispiele der Erfindung sind in den Zeichnungen dargestellt und werden nachfolgend anhand der Figuren 1 bis 2 erläutert:
Es zeigen:
Fig. 1 eine schematische Darstellung eines erfassten Umgebungsbildes mit einem berechneten kollisionsfreien Bereich und
Fig. 2 eine schematische Darstellung einer Karte mit einem markierten befahrbaren Bereich.

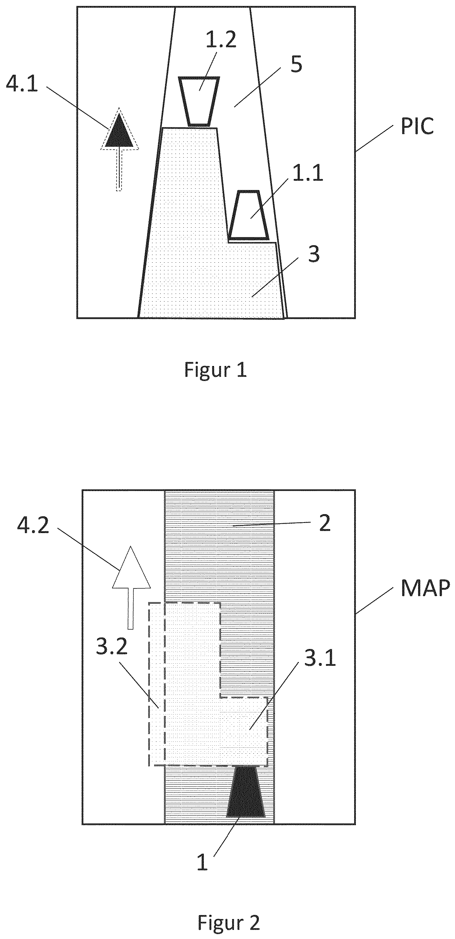

Im Folgenden sind wiederkehrende Merkmale in den Figuren 1 und 2 jeweils mit identischen Bezugszeichen versehen.

Figur 1 zeigt eine schematische Darstellung eines mittels einer Monokamera erfassten Umgebungsbildes PIC eines Fahrzeugs als mobile Einheit 1 (nicht gezeigt). An-hand des Umgebungsbildes PIC wird mittels eines maschinellen Lernverfahrens ein kollisionsfreier Bereich 3 berechnet und in dem Umgebungsbild PIC markiert. Der kollisionsfreie Bereich 3 entspricht dabei dem in Fahrtrichtung befahrbaren Teilbereich der Straßenoberfläche 5. In Figur 1 grenzt der kollisisionsfreie Bereich 3 an ein der mobilen Einheit 1 voraus-fahrendes Fahrzeug 1.1 und an ein der mobilen Einheit 1 entgegenkommendes Fahrzeug 1.2 an. Zudem wird anhand des Umgebungsbildes PIC ein Verkehrsschild als Landmarke 4.1 mittels eines trainierten neuronalen Netzwerks detektiert.

Figur 2 zeigt eine schematische Darstellung einer semantischen Karte MAP mit einem markierten befahrbaren Bereich 2 und einer bekannten Land-marke 4.2. Die Karte MAP umfasst auch Kartenpositionsangaben für die bekannte Landmarke 4.2.

Die Pose der mobilen Einheit 1 wird durch einen Vergleich des mindestens einen kollisionsfreien Bereichs 3 mit dem mindestens einen in der Karte MAP markierten befahrbaren Bereich 2 bestimmt. Dazu wird zunächst an-hand eines GPS-Systems eine Position der mobilen Einheit 1 initial geschätzt. Anhand der initial geschätzten Position der mobilen Einheit 1 wird die in dem Umgebungsbild PIC detektierte Landmarke 4.1 der in der Karte MAP markierten und bekannten Landmarke 4.2 mittels eines an sich bekannten Landmarken-basierten Lokalisierungsverfahrens zugeordnet. An-hand der Zuordnung und den Kartenpositionsangaben der bekannten Landmarke 4.2 wird mittels des an sich bekannten Landmarken-basierten Lokalisierungsverfahrens eine Hypothese für die Pose der mobilen Einheit 1 bestimmt.

Anhand der Hypothese für die Pose der mobilen Einheit 1 und einer vorbestimmten Kalibrierung der Monokamera wird der in Figur 1 in dem Umgebungsbild PIC markierte und berechnete kollisionsfreie Bereich 3 auf den in der Karte MAP markierten befahrbaren Bereich 2 projiziert. In Figur 2 entspricht die Projektion des in dem Umgebungsbild PIC markierten und berechneten kollisionsfreien Bereichs 3 auf den in der Karte MAP markierten befahrbaren Bereich 2 den Teilbereichen 3.1, 3.2.

Bei dem Vergleich wird dann eine Plausibilitätsprüfung der Hypothese für die Pose der mobilen Einheit 1 durchgeführt. Bei der Plausibilitätsprüfung wird derjenige Teilbereich 3.1 des berechneten kollisionsfreien Bereichs 3, 3.1, 3.2 bestimmt, der dem in der Karte MAP markierten befahrbaren Be-reich 2 eindeutig zuordenbar ist. Die Anzahl valider Pixel entspricht dann der Anzahl der in dem Teilbereich 3.1 enthaltenen Pixel. Die Anzahl invalider Pixel entspricht der Anzahl der in dem Teilbereich 3.2 enthaltenen Pixel. Der Teilbereich 3.2 ist das Komplement des Teilbereichs 3.1. Je höher die Anzahl valider Pixel ist, desto plausibler ist die Hypothese für die Pose der mobilen Einheit 1. Insbesondere wird das Verhältnis aus der Anzahl valider Pixel zu der Anzahl invalider Pixel mit einem vorgegebenen kritischen Wert verglichen. Plausibilität liegt vor, wenn das so bestimmte Verhältnis größer ist als der vorgegebene kritische Wert. Für das in Figur 2 gezeigte Beispiel ist der vorgegeben kritische Wert 4. Das Verhältnis aus der Anzahl valider Pixel zu der Anzahl invalider Pixel beträgt 5. Somit ist die mittels des Landmarkenbasierten Lokalisierungsverfahrens bestimmte Hypothese plausibel. Die durch den Vergleich des berechneten kollisionsfreien Bereichs 3 und den in der Karte MAP markierten befahrbaren Bereich 2 bestimmte Pose der mobilen Einheit 1 entspricht dann der plausiblen Hypothese für die Pose der mobilen Einheit 1.

In einem weiteren Ausführungsbeispiel werden in dem Umgebungsbild PIC mehrere Landmarken 4.1 detektiert. Die Karte MAP umfasst auch mehrere bekannte Landmarken 4.2 jeweils mit Kartenpositionsangaben. Anhand der initial geschätzten Position der mobilen Einheit 1 werden mittels des an sich bekannten Landmarkenbasierten Lokalisierungsverfahrens mehrere Hypothesen bestimmt. Jede Hypothese ordnet dabei den detektierten Landmarken 4.1 jeweils eine bekannte Landmarke 4.2 zu. Für jede Hypothese der Zuordnung wird dann anhand der Kartenpositionsangaben der jeweilig zugeordneten bekannten Landmarken 4.2 eine Hypothese für die Pose der mobilen Einheit 1 bestimmt.

Für jede der so bestimmten Hypothesen wird der berechnete kollisionsfreie Bereich 3 auf den in der Karte MAP markierten befahrbaren Bereich 2 projiziert und jeweils das Verhältnis aus der Anzahl valider Pixel zu der Anzahl invalider Pixel bestimmt. Anhand des so bestimmten Verhältnisses wird weiterhin eine Gewichtung der jeweiligen Hypothesen bestimmt, wobei der Hypothese mit dem größten so bestimmten Verhältnis das größte Gewicht zugeordnet wird. Die durch den Vergleich bestimmte Pose der mobilen Einheit 1 entspricht dann der Hypothese für die Pose der mobilen Einheit 1 mit dem größten Gewicht.

In einem weiteren Ausführungsbeispiel wird kein Landmarken-basiertes Lokalisierungsverfahren durchgeführt. Stattdessen werden 10000 Hypothesen für die Pose der mobilen Einheit 1 zufällig mittels eines Zufallszahlen-generators bestimmt. Bei dem Vergleich wird dann eine Minimierung einer Kostenfunktion durchgeführt, wobei die Kostenfunktion für jede der zufällig bestimmten Hypothesen einen charakteristischen Abstand zwischen dem berechneten kollisionsfreien Bereich 3 und den in der Karte MAP markierten befahrbaren Be-reich 2 in einem gemeinsamen Koordinatensystem angibt. Zur Bestimmung des charakteristischen Abstands wird anhand einer jeweiligen Hypothese eine Koordinatentransformation des berechneten kollisionsfreien Bereichs 3 von dem Kamerakoordinatensystem in das Kartenkoordinatensystem durchgeführt und die kürzesten Distanzen zwischen einem jeweiligen dreidimensionalen Punkt des mindestens einen kollisionsfreien Bereichs 3 und der in der Karte MAP durch den markierten befahrbaren Bereich 2 definierten Fläche bestimmt. Die Summe der so bestimmten kürzesten Distanzen entspricht dann dem charakteristischen Abstand.

Die Kostenfunktion wird mittels der Linearisierung im Korrektur-Schritt eines Kalman Filters minimiert. Die anhand des Vergleichs bestimmte Pose der mobilen Einheit 1 entspricht dann dem Minimum der Kostenfunktion und wird verwendet, um eine Aktualisierung der Pose der mobilen Einheit 1 zu bestimmen.

Die in den Ausführungsbeispielen beschriebenen Verfahren werden mit einem System durchgeführt, das eine mobile Einheit 1 mit einer Monokamera als Sensorvorrichtung, eine elektronische Speichereinheit und eine elektro-nische Auswerte- und Steuereinheit umfasst. Das System weist auch ein GPS-System auf. Die Monokamera ist eingerichtet, Umgebungsbilder der mobilen Einheit 1 zu erfassen. Die Karte **MAP** mit dem markierten befahrbaren Bereich 2 ist in der elektronischen Speichereinheit gespeichert. Die elektronische Auswerte- und Steuereinheit ist eingerichtet, den kollisions-freien Bereich 3 anhand einer mittels der Monokamera erfassten Umge-bungsbildsequenz zu berechnen. Die elektronische Auswerte- und Steuereinheit ist auch dazu eingerichtet, die Pose der mobilen Einheit 1 anhand des Vergleichs des kollisionsfreien Bereichs 3 mit dem in der Karte MAP markierten befahrbaren Bereich 2 zu bestimmen.

Lediglich in den Ausführungsbeispielen offenbarte Merkmale der verschiedenen Ausführungsformen können miteinander kombiniert und einzeln beansprucht werden.

## Patentansprüche

1. Verfahren zur Bestimmung der Pose einer mobilen Einheit (1), die als ein Landfahrzeug oder ein Wasserfahrzeug ausgebildet ist, mit mindestens einer Sensorvorrichtung, die zum Erfassen von Umgebungsbildern (PIC) der mobilen Einheit (1) eingerichtet ist, und einer Karte (MAP), in der mindestens ein befahrbarer Bereich (2) markiert ist, wobei die Karte (MAP) in einer elektronischen Speichereinheit gespeichert ist und die Karte (MAP) eine semantische Karte ist und/oder mindestens eine bekannte Landmarke (4.2) mit Kartenpositionsangaben umfasst, bei dem
mindestens ein Umgebungsbild (PIC) mittels der mindestens einen Sensorvorrichtung erfasst und anhand des mindestens einen erfassten Umgebungsbildes (PIC) mindestens ein kollisionsfreier Bereich (3, 3.1, 3.2) mittels einer elektronischen Auswerte- und Steuereinheit berechnet wird, und
mittels der elektronischen Auswerte- und Steuereinheit durch einen Vergleich des mindestens einen berechneten kollisionsfreien Bereichs (3, 3.1, 3.2) mit dem mindestens einen in der Karte (MAP) markierten befahrbaren Bereich (2) die Pose der mobilen Einheit (1) bestimmt wird.

2. Verfahren nach Anspruch 1, **dadurch gekennzeichnet, dass** die Pose der mobilen Einheit (1) Positionsangaben und/oder Orientierungswinkelangaben umfasst und/oder der mindestens eine markierte befahrbare Bereich (2) einer zweidimensionalen Punktmenge oder einer dreidimensionalen Punktmenge in einem Kartenkoordinatensystem entspricht.

3. Verfahren nach einem der vorhergehenden Ansprüche, **dadurch gekennzeichnet, dass** der mindestens eine kollisionsfreie Bereich (3, 3.1, 3.2) einer zweidimensionalen Punktmenge oder einer dreidimensionalen Punktmenge in einem Kamerakoordinatensystem entspricht und/oder der mindestens eine kollisionsfreie Bereich (3, 3.1, 3.2) einer von der mobilen Einheit (1) ausgehend in Fahrtrichtung kollisionsfrei befahrbaren Oberfläche entspricht und/oder der mindestens eine kollisionsfreie Bereich (3, 3.1, 3.2) anhand von mindestens zwei sequentiell erfassten Umgebungsbildern (PIC) berechnet wird und/oder der mindestens eine kollisionsfreie Bereich (3, 3.1, 3.2) anhand einer monokularen Umgebungsbildsequenz berechnet wird und/oder der mindestens eine kollisionsfreie Bereich (3, 3.1, 3.2) mittels semantischer Segmentierung berechnet wird und/oder der mindestens eine kollisionsfreie Bereich (3, 3.1, 3.2) mittels eines maschinellen Lernverfahrens, insbesondere mittels eines trainierten neuronalen Netzes, berechnet wird.

4. Verfahren nach einem der vorhergehenden Ansprüche, **dadurch gekennzeichnet, dass** der berechnete mindestens eine kollisionsfreie Bereich (3, 3.1, 3.2) und/oder der in der Karte (MAP) markierte mindestens eine befahrbare Bereich (2) auf die lokale Grundebene der mobilen Einheit (1) projiziert werden/wird.

5. Verfahren nach einem der vorhergehenden Ansprüche, **dadurch gekennzeichnet, dass** mindestens eine Hypothese für die Pose der mobilen Einheit (1) mittels eines Lokalisierungsverfahrens berechnet wird und bei dem Vergleich eine Plausibilitätsprüfung der mindestens einen berechneten Hypothese durchgeführt wird.

6. Verfahren nach Anspruch 5, **dadurch gekennzeichnet, dass** das Lokalisierungsverfahren ein Landmarken-basiertes Lokalisierungsverfahren ist und/oder
die mindestens eine Hypothese für die Pose der mobilen Einheit (1) anhand der Zuordnung mindestens einer in dem erfassten Umgebungsbild (PIC) detektierten Landmarke (4.1) mit mindestens einer in der Karte (MAP) markierten bekannten Landmarke (4.2) bestimmt wird und/oder
mehrere Hypothesen für die Pose der mobilen Einheit (1) mittels eines Landmarken-basierten Lokalisierungsverfahrens bestimmt werden.

7. Verfahren nach Anspruch 5 oder 6, **dadurch gekennzeichnet, dass** bei der Plausibilitätsprüfung eine Bestimmung desjenigen Teilbereichs (3.1) des mindestens einen kollisionsfreien Bereichs (3, 3.1, 3.2) durchgeführt wird, der dem mindestens einen in der Karte (MAP) markierten befahrbaren Bereich (2) anhand der mindestens einen Hypothese eindeutig zuordenbar ist und/oder
die mindestens eine Hypothese plausibel ist, wenn das Verhältnis aus einer Größe eines dem mindestens einen markierten befahrbaren Bereich (2) anhand der mindestens einen Hypothese zuordbaren Teilbereichs (3.1) des mindestens einen kollisionsfreien Bereichs (3, 3.1, 3.2) und dessen Komplement (3.2) einen kritischen Wert überschreitet.

8. Verfahren nach einem der Ansprüche 5 bis 7 **dadurch gekennzeichnet, dass** die durch den Vergleich bestimmte Pose der mobilen Einheit (1) einer plausiblen Hypothese entspricht und/oder
eine Pose der mobilen Einheit (1) mittels einer weiteren Sensorvorrichtung initial geschätzt wird und die durch den Vergleich bestimmte Pose der mobilen Einheit (1) der initial geschätzten Pose der mobilen Einheit (1) oder einer plausiblen Hypothese entspricht und/oder
mehrere plausible Hypothesen mittels der Plausibilitätsprüfung bestimmt werden und der Vergleich eine Gewichtung der mehreren plausiblen Hypothesen umfasst und die durch den Vergleich bestimmte Pose der mobilen Einheit der plausiblen Hypothese mit dem größten Gewicht entspricht.

9. Verfahren nach einem der vorhergehenden Ansprüche, **dadurch gekennzeichnet, dass** zumindest eine Hypothese für die Pose der mobilen Einheit (1) bestimmt wird und bei dem Vergleich eine Minimierung einer Kostenfunktion durchgeführt wird, wobei die Kostenfunktion für die zumindest eine Hypothese mindestens einen charakteristischen Abstand zwischen dem mindestens einen berechneten kollisionsfreien Bereich (3, 3.1, 3.2) und den in der Karte (MAP) markierten befahrbaren Bereich (2) in einem gemeinsamen Koordinatensystem angibt, und die Pose der mobilen Einheit (1) dem Minimum der Kostenfunktion entspricht.

10. Verfahren nach Anspruch 9, **dadurch gekennzeichnet, dass** der mindestens eine charakteristische Abstand anhand der kürzesten Distanzen zwischen einem jeweiligen dreidimensionalen Punkt des mindestens einen kollisionsfreien Bereichs (3, 3.1, 3.2) und der in der Karte (MAP) durch den markierten mindestens einen befahrbaren Bereich (2) definierten Fläche bestimmt wird.

11. Verfahren nach Anspruch 9 oder 10, **dadurch gekennzeichnet, dass** mittels der Minimierung einer Kostenfunktion eine Aktualisierung der Pose der mobilen Einheit (1) durchgeführt wird.

12. System umfassend eine mobile Einheit (1), die als ein Landfahrzeug oder ein Wasserfahrzeug ausgebildet ist, mit mindestens einer Sensorvorrichtung, die eingerichtet ist, mindestens ein Umgebungsbild (PIC) der mobilen Einheit (1) zu erfassen, einer elektronischen Speichereinheit, in der eine Karte (MAP) mit mindestens einem markierten befahrbaren Bereich (2) gespeichert ist, wobei die Karte (MAP) eine semantische Karte ist und/oder mindestens eine bekannte Landmarke (4.2) mit Kartenpositionsangaben umfasst, und eine elektronische Auswerte- und Steuereinheit die eingerichtet ist, mindestens einen kollisionsfreien Bereich (3, 3.1, 3.2) anhand mindestens eines mittels der mindestens einen Sensorvorrichtung erfassten Umgebungsbildes (PIC) zu berechnen, und eine Pose der mobilen Einheit (1) anhand eines Vergleichs des mindestens einen kollisionsfreien Bereichs (3, 3.1, 3.2) mit dem mindestens einen in der Karte (MAP) markierten befahrbaren Bereich (2) zu bestimmen.

13. System nach Anspruch 12, **dadurch gekennzeichnet, dass** das System und/oder die mobile Einheit (1) und/oder die elektronische Auswerte- und Steuereinheit mindestens eine weitere Sensorvorrichtung aufweist, wobei die mindestens eine weitere Sensorvorrichtung ein Satellitenortungssystem und/oder ein mobiles Kommunikationssystem umfasst.

14. Computerprogrammprodukt, das ein Computerprogramm aufweist, das Softwaremittel zum Durchfuhren eines Verfahrens nach einem der Ansprüche 1 bis 11 oder zum Ansteuern eines Systems nach einem der Ansprüche 12 oder 13 aufweist, wenn das Computerprogramm in einer Recheneinheit abläuft.

## Claims

1. A method for determining the pose of a mobile unit (1), which is formed as a land vehicle or a watercraft, with at least one sensor device, which is configured for capturing environmental images (PIC) of the mobile unit (1), and a map (MAP), in which at least one drivable area (2) is marked, wherein the map (MAP) is stored in an electronic storage unit and the map (MAP) is a semantic map and/or includes at least one known landmark (4.2) with map position indications, in which
at least one environmental image (PIC) is captured by means of the at least one sensor device and at least one collision-free area (3, 3.1, 3.2) is calculated by means of an electronic evaluation and control unit based on the at least one captured environmental image (PIC), and
the pose of the mobile unit (1) is determined by means of the electronic evaluation and control unit by a comparison of the at least one calculated collision-free area (3, 3.1, 3.2) to the at least on drivable area (2) marked in the map (MAP).

2. The method according to claim 1, **characterized in that** the pose of the mobile unit (1) includes position indications and/or orientation angle indications and/or the at least one marked drivable area (2) corresponds to a two-dimensional point set or a three-dimensional point set in a map coordinate system.

3. The method according to any one of the preceding claims, **characterized in that** the at least one collision-free area (3, 3.1, 3.2) corresponds to a two-dimensional point set or a three-dimensional point set in a camera coordinate system and/or the at least one collision-free area (3, 3.1, 3.2) corresponds to a surface drivable without collision starting from the mobile unit (1) in direction of travel and/or the at least collision-free area (3, 3.1, 3.2) is calculated based on at least two sequentially captured environmental images (PIC) and/or the at least one collision-free area (3, 3.1, 3.2) is calculated based on a monocular environmental image sequence and/or the at least one collision-free area (3, 3.1, 3.2) is calculated by means of semantic segmentation and/or the at least one collision-free area (3, 3.1, 3.2) is calculated by means of a machine learning method, in particular by means of a trained neural network.

4. The method according to any one of the preceding claims, **characterized in that** the calculated at least one collision-free area (3, 3.1, 3.2) and/or the at least one drivable area (2) marked in the map (MAP) are projected to the local ground plane of the mobile unit (1).

5. The method according to any one of the preceding claims, **characterized in that** at least one hypothesis for the pose of the mobile unit (1) is calculated by means of a localization method and a plausibility check of the at least one calculated hypothesis is performed in the comparison.

6. The method according to claim 5, **characterized in that** the localization method is a landmark-based localization method, and/or
the at least one hypothesis for the pose of the mobile unit (1) is determined based on the association of at least one landmark (4.1) detected in the captured environmental image (PIC) with at least one known landmark (4.2) marked in the map (MAP), and/or
multiple hypotheses for the pose of the mobile unit (1) are determined by means of a landmark-based localization method.

7. The method according to claim 5 or 6, **characterized in that** a determination of that partial area (3.1) of the at least one collision-free area (3, 3.1, 3.2) is performed in the plausibility check, which can be uniquely associated with the at least one drivable area (2) marked in the map (MAP) based on the at least one hypothesis, and/or
the at least one hypothesis is plausible if the ratio of a size of a partial area (3.1) of the at least one collision-free area (3, 3.1, 3.2) capable of being associated with the at least one marked drivable area (2) based on the at least one hypothesis and the complement (3.2) thereof exceeds a critical value.

8. The method according to any one of claims 5 to 7, **characterized in that** the pose of the mobile unit (1) determined by the comparison corresponds to a plausible hypothesis, and/or
a pose of the mobile unit (1) is initially estimated by means of a further sensor device and the pose of the mobile unit (1) determined by the comparison corresponds to the initially estimated pose of the mobile unit (1) or to a plausible hypothesis, and/or
multiple plausible hypotheses are determined by means of the plausibility check and the comparison includes weighting of the multiple plausible hypotheses and the pose of the mobile unit determined by the comparison corresponds to the plausible hypothesis with the greatest weight.

9. The method according to any one of the preceding claims, **characterized in that** at least one hypothesis for the pose of the mobile unit (1) is determined and a minimization of a cost function is performed in the comparison, wherein the cost function for the at least one hypothesis indicates at least one characteristic distance between the at least one calculated collision-free area (3, 3.1, 3.2) and the drivable area (2) marked in the map (MAP) in a common coordinate system, and the pose of the mobile unit (1) corresponds to the minimum of the cost function.

10. The method according to claim 9, **characterized in that** the at least one characteristic distance is determined based on the shortest distances between a respective three-dimensional point of the at least one collision-free area (3, 3.1, 3.2) and the surface defined in the map (MAP) by the marked at least one drivable area (2).

11. The method according to claim 9 or 10, **characterized in that** an update of the pose of the mobile unit (1) is performed by means of the minimization of a cost function.

12. A system including a mobile unit (1), which is formed as a land vehicle or a watercraft, with at least one sensor device, which is configured to capture at least one environmental image (PIC) of the mobile unit (1), an electronic storage unit, in which a map (MAP) with at least one marked drivable area (2) is stored, wherein the map (MAP) is a semantic map and/or includes at least one known landmark (4.2) with map position indications, and an electronic evaluation and control unit, which is configured to calculate at least one collision-free area (3, 3.1, 3.2) based on at least one environmental image (PIC) captured by means of the at least one sensor device, and to determine a pose of the mobile unit (1) based on a comparison of the at least one collision-free area (3, 3.1, 3.2) to the at least one drivable area (2) marked in the map (MAP).

13. The system according to claim 12, **characterized in that** the system and/or the mobile unit (1) and/or the electronic evaluation and control unit comprise at least one further sensor device, wherein the at least one further sensor device includes a satellite tracking system and/or a mobile communication system.

14. A computer program product, which comprises a computer program, which comprises software means for performing a method according to any one of claims 1 to 11 or for controlling a system according to any one of claims 12 or 13 when the computer program runs in a computing unit.

## Revendications

1. Procédé pour déterminer la pose d'une unité mobile (1) qui est conçue comme un véhicule terrestre ou un navire, ayant au moins un dispositif à capteur qui est conçu pour capturer des images d'environnement (PIC) de l'unité mobile (1), et une carte (MAP) sur laquelle au moins une zone franchissable (2) est marquée, la carte (MAP) étant stockée dans une unité de mémoire électronique et la carte (MAP) étant une carte sémantique et/ou comprenant au moins un point de repère connu (4.2) avec des indications de position cartographique,
au moins une image d'environnement (PIC) étant capturée par au moins un dispositif à capteur et au moins une zone sans collision (3, 3.1, 3.2) étant calculée au moyen d'une unité d'évaluation et de commande électronique sur la base de la au moins une image d'environnement (PIC) capturée, et
la pose de l'unité mobile (1) étant déterminée au moyen de l'unité d'évaluation et de commande électronique par une comparaison de la au moins une zone sans collision (3, 3.1, 3.2) calculée avec la au moins une zone franchissable (2) marquée sur la carte (MAP).

2. Procédé selon la revendication 1, **caractérisé en ce que** la pose de l'unité mobile (1) comprend des indications de position et/ou des indications d'angle d'orientation et/ou la au moins une zone franchissable (2) marquée correspond à un ensemble de points bidimensionnels ou à un ensemble de points tridimensionnels dans un système de coordonnées cartographiques.

3. Procédé selon l'une des revendications précédentes, **caractérisé en ce que** la au moins une zone sans collision (3, 3.1, 3.2) correspond à un ensemble de points bidimensionnels ou à un ensemble de points tridimensionnels dans un système de coordonnées de caméra et/ou la au moins une zone sans collision (3, 3.1, 3.2) correspond à une surface pouvant être parcourue sans collision en partant de l'unité mobile (1) dans une direction de déplacement et/ou la au moins une zone sans collision (3, 3.1, 3.2) est calculée au moyen d'au moins deux images d'environnement (PIC) capturées séquentiellement et/ou la au moins une zone sans collision (3, 3.1, 3.2) est calculée au moyen d'une séquence d'images d'environnement monoculaires et/ou la au moins une zone sans collision (3, 3.1, 3.2) est calculée au moyen d'une segmentation sémantique et/ou la au moins une zone sans collision (3, 3.1, 3.2) est calculée au moyen d'un procédé d'apprentissage automatique, en particulier au moyen d'un réseau neuronal entraîné.

4. Procédé selon l'une des revendications précédentes, **caractérisé en ce que** la au moins une zone sans collision (3, 3.1, 3.2) calculée et/ou la au moins une zone franchissable (2) marquée sur la carte (MAP) est (sont) projetée(s) au niveau du sol local de l'unité mobile (1).

5. Procédé selon l'une des revendications précédentes, **caractérisé en ce qu'**au moins une hypothèse concernant la pose de l'unité mobile (1) est calculée au moyen d'un procédé de localisation et lors de la comparaison, un contrôle de vraisemblance de la au moins une hypothèse calculée est effectué.

6. Procédé selon la revendication 5, **caractérisé en ce que** le procédé de localisation est un procédé de localisation à base de points de repère et/ou
la au moins une hypothèse concernant la pose de l'unité mobile (1) est déterminée par l'affectation d'au moins un point de repère (4.1) détecté dans l'image d'environnement (PIC) capturée à au moins un point de repère connu (4.2) marqué sur la carte (MAP) et/ou
plusieurs hypothèses concernant la pose de l'unité mobile (1) sont déterminées au moyen d'un procédé de localisation à base de points de repère.

7. Procédé selon la revendication 5 ou 6, **caractérisé en ce que** lors du contrôle de vraisemblance, une détermination de la zone partielle (3.1) de la au moins une zone sans collision (3, 3.1, 3.2) qui peut être affectée de manière unique à la au moins une zone franchissable (2) marquée sur la carte (MAP) au moyen de la au moins une hypothèse, est effectuée et/ou
la au moins une hypothèse est plausible lorsque le rapport entre une taille d'une zone partielle (3.1) de la au moins une zone sans collision (3, 3.1, 3.2) pouvant être affectée à la au moins une zone franchissable (2) marquée au moyen de la au moins une hypothèse, et son complément (3.2) dépasse une valeur critique.

8. Procédé selon l'une des revendications 5 à 7, **caractérisé en ce que** la pose de l'unité mobile (1) déterminée par la comparaison correspond à une hypothèse plausible et/ou
une pose de l'unité mobile (1) est initialement estimée au moyen d'un dispositif à capteur supplémentaire et la pose de l'unité mobile (1) déterminée par la comparaison correspond à la pose initialement estimée de l'unité mobile (1) ou à une hypothèse plausible et/ou
plusieurs hypothèses plausibles sont déterminées au moyen du contrôle de vraisemblance et la comparaison comprend une pondération de la pluralité d'hypothèses plausibles et la pose de l'unité mobile déterminée par la comparaison correspond à l'hypothèse plausible ayant le poids le plus élevé.

9. Procédé selon l'une des revendications précédentes, **caractérisé en ce qu'**au moins une hypothèse concernant la pose de l'unité mobile (1) est déterminée et lors de la comparaison, une minimisation d'une fonction de coût est effectuée, la fonction de coût pour la au moins une hypothèse indiquant au moins une distance caractéristique entre la au moins une zone sans collision (3, 3.1, 3.2) calculée et la zone franchissable (2) marquée sur la carte (MAP) dans un système de coordonnées commun, et la pose de l'unité mobile (1) correspondant au minimum de la fonction de coût.

10. Procédé selon la revendication 9, **caractérisé en ce que** la au moins une distance caractéristique est déterminée au moyen des plus courtes distances entre un point tridimensionnel respectif de la au moins une zone sans collision (3, 3.1, 3.2) et la surface définie sur la carte (MAP) par la au moins une zone franchissable (2) marquée.

11. Procédé selon la revendication 9 ou 10, **caractérisé en ce qu'**une mise à jour de la pose de l'unité mobile (1) est effectuée en minimisant une fonction de coût.

12. Système comprenant une unité mobile (1) qui est conçue comme un véhicule terrestre ou un navire, comportant au moins un dispositif à capteur qui est conçu pour capturer au moins une image d'environnement (PIC) de l'unité mobile (1), une unité de mémoire électronique dans laquelle est stockée une carte (MAP) ayant au moins une zone franchissable (2) marquée, la carte (MAP) étant une carte sémantique et/ou comprenant au moins un point de repère connu (4.2) avec des indications de position cartographique, et une unité d'évaluation et de commande électronique qui est conçue pour calculer au moins une zone sans collision (3, 3.1, 3.2) au moyen d'au moins une image d'environnement (PIC) capturée au moyen du au moins dispositif à capteur, et pour déterminer une pose de l'unité mobile (1) au moyen d'une comparaison de la au moins une zone sans collision (3, 3.1, 3.2) avec la au moins une zone franchissable (2) marquée sur la carte (MAP).

13. Système selon la revendication 12, **caractérisé en ce que** le système et/ou l'unité mobile (1) et/ou l'unité d'évaluation et de commande électronique comporte au moins un dispositif à capteur supplémentaire, le au moins un dispositif à capteur supplémentaire comprenant un système de localisation par satellite et/ou un système de communication mobile.

14. Produit de programme informatique comportant un programme informatique comportant des moyens logiciels pour mettre en œuvre un procédé selon l'une des revendications 1 à 11 ou pour commander un système selon l'une des revendications 12 ou 13, lorsque le programme informatique s'exécute dans une unité de calcul.
